# FASCICULE DE BREVET EUROPEEN

(11) **EP 0 404 692 B1**
(45) Date de publication et mention de la délivrance du brevet: **11.08.1993**
(21) Numéro de dépôt: 90401784.5
(22) Date de dépôt: 22.06.1990
(51) Int. Cl.: H02H 3/02, H02H 3/06

(54) **Dispositif de protection d'une source de tension contre des courts-circuits**
Schutzanordnung für eine Spannungsquelle gegen Kurzschlüsse
Protection device for a voltage source against short-circuits

(30) Priorité: 23.06.1989 FR 8908387
(43) Date de publication de la demande: 27.12.1990
(73) Titulaire: SAT (Société Anonyme de Télécommunications), 75116 Paris (FR)
(72) Inventeur: Hewko, Eric Jean-François, F-75631 Paris Cedex 13 (FR)
(74) Mandataire: Cabinet Martinet & Lapoux

(56) Documents cités:
- DE-A- 3 535 864
- GB-A- 1 234 556
- IBM TECHNICAL DISCLOSURE BULLETIN. vol. 18, no. 8, 08 janvier 1976, NEW YORK US page 2430 R.A.MADDOX: "OVERCURRENT PROTECTOR WITH AUTOMATIC RESET"

## Description

La présente invention concerne un dispositif pour protéger une source de tension contre des courts-circuits dans un circuit de charge alimenté par la source.

En particulier, un tel dispositif est destiné à protéger une source de tension pour téléalimenter des terminaux de télécommunications appliqués au point de référence S défini par la recommandation I430 du CCITT, Fascicule III. 5, pages 141 à 177, octobre 1984. Selon cette recommandation, la tension de téléalimentation VE de la source a pour valeur nominale 41 Volts et doit être comprise entre 36 V et 42 V, et la puissance maximale à fournir au circuit de charge, ici constitué par la ligne reliant la source et les terminaux, doit être de 4 Watts environ. La source de téléalimentation doit en outre être protégée contre les courts-circuits en ligne.

Une solution simple à ce problème pourrait consister à utiliser un circuit connu, connecté en série sur l'un des fils de la ligne, pour limiter le courant en ligne à 120 mA, ce qui correspond à un peu plus de 4 Watts pour une tension de source VE au moins égale à 36 Volts. Cette solution présente deux inconvénients. D'une part, il faut dissiper 4 W dans le circuit de téléalimentation. D'autre part, la limitation de courant interdit de fournir des courants transitoires, de l'ordre de plusieurs centaines de milliampères pendant quelques dizaines de millisecondes, lors du branchement d'un terminal à la ligne. Pour remédier à ce dernier inconvénient, on pourrait augmenter le courant de limitation, ce qui augmenterait alors la puissance à dissiper par la source.

La présente invention vise à fournir un dispositif de protection contre les courts-circuits évitant les inconvénients d'une limitation de courant et les problèmes de dissipation lors de la présence d'un court-circuit en ligne.

A cette fin, le dispositif de protection est caractérisé en ce qu'il comprend :
- des moyens de mesure de tension pour détecter des tensions aux bornes du circuit de charge supérieures à des premier et second seuils de tension, le premier seuil étant supérieur au second seuil,
- un interrupteur de courant connecté entre une borne du circuit de charge et une borne de la source de tension et commandé par les moyens de mesure de tension,
- une thermistance à coefficient de température positif connectée en série avec le circuit de charge et l'interrupteur de courant entre les bornes de la source de tension, et offrant une tension de basculement sensiblement inférieure au premier seuil de tension et nettement supérieure au second seuil de tension déterminé par les moyens de mesure de tension, et
- une résistance de dérivation connectée en parallèle avec la combinaison série comprenant la thermistance et l'interrupteur de courant,
- ledit interrupteur de courant étant commandé par les moyens de mesure de tension pour basculer d'un état fermé à un état ouvert lorsque la tension aux bornes du circuit de charge devient inférieure au premier seuil et pour basculer de l'état ouvert à l'état fermé lorsque la tension aux bornes du circuit de charge devient supérieure au second seuil.

L'invention fait appel à une thermistance à coefficient de température positif (CTP) qui, en première approximation, peut être considérée comme ayant deux états stables. A un premier état qui est défini par un courant ITH traversant la thermistance inférieur à un courant de basculement ITHb et à l'absence de court-circuit dans le circuit de charge, la résistance RTH de la thermistance est très faible, et peut être considérée comme une constante rTH. A un second état dit basculé, défini par un courant ITH supérieur à ITHb, la résistance RTH de la thermistance croît rapidement et exponentiellement. L'inertie thermique de la thermistance lors du basculement notamment est relativement grande, de l'ordre de quelques secondes, et par suite, la thermistance accepte des variations brèves de courant élevé, telles que des appels de courant transitoire lors du branchement d'un terminal à la ligne, sans entraîner un basculement du premier au second état.

Comme on le verra dans la suite, si la thermistance est telle que rTH ≅ 20 Ω et ITHb=130 mA, la source est capable de fournir environ 4 Watts sous une tension VE supérieure à 36 Volts. Le courant après basculement est inférieur à 5 mA, car le circuit de charge est en série avec la résistance de dérivation de plusieurs kiloohms.

Toutefois, comme il est connu, après le basculement au second état, la thermistance demeure à l'état basculé tant que la tension VTH aux bornes de celle-ci est suffisante, de l'ordre de 3 Volts. L'utilisation seule de la thermistance ne permettrait donc pas de provoquer le retour de la thermistance au premier état, lors de la suppression de court-circuit, si par exemple le ou les terminaux raccordés à la ligne offre des impédances trop faibles. Les moyens de mesure de tension en combinaison avec les moyens d'interruption de courant, selon l'invention, permettent de reconnecter la thermistance avec la valeur rTH en série avec le circuit de charge, dès que la tension aux bornes du circuit de charge excède le second seuil de tension.

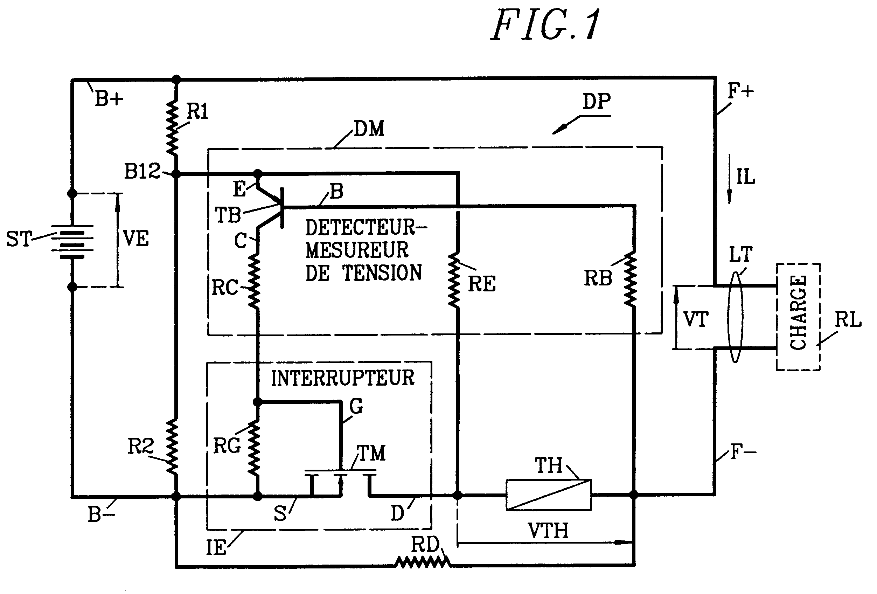

D'autres avantages et caractéristiques de l'invention apparaîtront plus clairement à la lecture de la description suivante, en référence à la Fig. 1 unique montrant un dispositif de protection contre des courts-circuits selon une réalisation préférée de l'invention.

Cette réalisation concerne particulièrement l'emploi du dispositif de protection DP pour une source de téléalimentation en tension ST fournissant une tension nominale VE=41 V à une ligne de transmission bifilaire polarisée LT qui présente une résistance de charge RL. Cette charge est constituée par exemple par la ligne elle-même et par un ou plusieurs terminaux reliés à la ligne selon la recommandation I.430 du CCITT déjà citée. En fonctionnement normal, la charge RL est supérieure à 300 Ω et est traversée par un courant IL de l'ordre de 130 mA. Dans ces conditions, la source de tension ST fournit sensiblement plus que 4 Watts pour une tension VE comprise entre 36 V et 42 V.

Le dispositif de protection DP comprend un pont résistif de division de tension R1-R2, un circuit détecteur-mesureur de tension DM, un interrupteur de courant électronique IE, une thermistance TH et une résistance de dérivation RD.

Des résistances R1 et R2 du pont diviseur de tension sont connectées en série entre les bornes B+ et B- de la source ST, typiquement à 0 Volt et -41 Volt. La somme des valeurs ohmiques des deux résistances R1 et R2 est très élevée, supérieure à la centaine de kiloohms, afin de ne pas perturber le fonctionnement normal de la ligne. Une première borne de la première résistance R1 est reliée à la borne B+ et à une première borne F+ de la résistance de charge RL constituée par une extrémité d'un premier fil de ligne à polarité positive. La première résistance R1 est petite par rapport à la seconde résistance R2 ce qui permet de ramener toute mesure de tension aux bornes de la charge RL à une mesure aux bornes de la résistance R2. Typiquement, les résistances R1 et R2 sont égales à 10 kΩ et 560 kΩ.

Le circuit détecteur-mesureur de tension DM comprend essentiellement un transistor bipolaire PNP, désigné par TB. L'émetteur E de ce transistor est relié à des secondes bornes communes B12 des résistances R1 et R2 ainsi qu'à une résistance d'émetteur RE, typiquement de 6,8 kΩ. Les base B et collecteur C du transistor TB sont reliés à des résistances RB et RC également de plusieurs kiloohms, typiquement égales à 220 kΩ et 6,8 kΩ respectivement.

L'interrupteur électronique IE est organisé autour d'un transistor à effet de champ, de préférence à grille isolée, tel qu'un transistor MOS à enrichissement et à canal à conductivité du type N, désigné par TM.

La grille G du transistor TM est commandée par le circuit DM, et est reliée d'une part, au collecteur C du transistor TB à travers la résistance RC, et d'autre part, à la source S du transistor TM à travers une résistance de grille RG typiquement de 330 kΩ. La source S est également reliée à une première borne de la résistance R2 et à la borne à polarité négative B- de la source de tension ST. Le drain D du transistor MOS TM est relié à l'émetteur E du transistor bipolaire TB à travers la résistance RE.

La thermistance TH est une résistance à coefficient de température positif (CTP), bar exemple en céramique ferro-électrique semiconductrice. Une première borne de la thermistance est reliée à la borne de polarité négative F- de la résistance de ligne RL, à la base B du transistor TB à travers la résistance RB, et à une première borne de la résistance RD. Une seconde borne de la thermistance TH est reliée au drain D du transistor TM, et est reliée à l'émetteur E du transistor bipolaire TB à travers la résistance RE.

La résistance de dérivation RD a une première borne reliée à la première borne F- de la thermistance TH et une seconde borne reliée à la source S du transistor MOS TM.

Le dispositif de protection DP offre deux états stables ET1 et ET2 correspondant respectivement au fonctionnement normal de la ligne LT et à la présence d'un court-circuit indésirable dans la ligne. Ces deux états résultant de "mesures de tension" de la ligne, c'est-à-dire de la valeur de l'impédance d'entrée RL vue aux bornes F+ et F- de la ligne LT. En pratique, le circuit détecteur-mesureur de tension DM détecte la tension entre les bornes B12 et F- ce qui se traduit par une variation de la tension base-émetteur du transistor bipolaire TB. Comme cela apparaîtra dans la suite, le circuit DM peut être considéré comme localisé dans la branche médiane d'un pont de Wheatstone constitué par les résistances R1 et R2, la résistance variable RL, et tantôt la thermistance TH pour l'état ET1, tantôt la résistance de dérivation RD pour l'état ET2.

A l'état ET1 de fonctionnement normal, l'ensemble source ST et dispositif DP est équivalent à une source de tension de 41 V avec une impédance série interne égale à la résistance faible de la thermistance TH, qui alimente une résistance de charge RL au moins de l'ordre de RL1=300 Ω. D'une part, le transistor bipolaire TB est saturé ce qui commande à l'état passant le transistor MOS TM, et donc ferme l'interrupteur IE qui met pratiquement en série la thermistance TH avec la résistance de charge RL. D'autre part, la thermistance TH offre une résistance faible rTH, de l'ordre de 20 Ω, très inférieure à la résistance de dérivation RD, typiquement égale à 8,2 kΩ. La valeur de rTH=20 Ω pour la thermistance est sensiblement constante tant que le courant dans la ligne LT est inférieur au courant de basculement ITHb de la thermistance, de l'ordre de 130 mA. Lorsque la tension VE de la source ST varie entre 36 et 42 V, la puissance fournie est sensiblement supérieure à 4 Watts.

Le premier état ET1 est maintenu tant que la tension VTH≅(RTH/(RTH+RL))VE aux bornes D et F- de la thermistance TH est inférieure à une tension maximale VTH1, suite à une diminution de la charge RL tendant progressivement vers un court-circuit. En effet, lorsque la tension V-L diminue, la tension VTH=E-VL augmente. La tension maximale VTH1 correspond à un premier seuil VL1 de la tension de charge VL égal à environ 20 V, soit VTH1=VL1≅20 V pour VE≅41 V.

Il est à noter que la tension VTH1 est suffisamment grande pour que des courants transitoires relativement forts, de l'ordre de 800 mA pendant 200 ms, dûs à un branchement d'un terminal à la ligne LT, ne provoquent pas un basculement de l'état ET1 à l'état ET2. La tension VTH1 est d'autre part inférieure à la tension VTHm pour maintenir la thermistance TH au second état ET2. Cette dernière condition assure que la thermistance présente toujours une résistance faible à l'état ET1 en cas de surcharges fugitives de la ligne LT.

Le second état ET2 correspond à un fonctionnement en surcharge, dû à un court-circuit plus ou moins franc entre les deux fils de ligne F+ et F-. Le passage de l'état ET1 à l'état ET2 se produit dès que la tension VL est sensiblement inférieure à VL1, et donc la tension VTH aux bornes de la thermistance TH atteint VTH1. A l'état ET2, la thermistance est équivalente à une résistance très élevée, de l'ordre de plusieurs dizaines de kiloohms, ce qui provoque le blocage du transistor bipolaire TB, et par suite le passage à l'état non-conducteur du transistor MOS TM et l'ouverture de l'interrupteur IE. La source de tension ST est alors considérée comme seulement reliée à la résistance de dérivation RD ayant une valeur ohmique constante grande. La source ST fournit alors une puissance très faible de l'ordre de 41²/8200=0,2 W, ce qui correspond à un courant IL en ligne inférieur à 5 mA.

Le basculement précédent du premier état ET1 au second état ET2 peut être quasi-immédiat si le court-circuit dans la ligne est franc brusquement, c'est-à-dire si le courant en ligne IL est suffisamment élevé pour que la tension VTH aux bornes de la thermistance excède VTH1=E-VL1. Toutefois, le basculement de l'état ET1 vers l'état ET2 est plus progressif, si le courant en ligne IL est inférieur au courant élevé précédent, tout en étant supérieur au courant de basculement ITHb de la thermistance TH ; dans ce cas, la tension VTH croît jusqu'à VTH1 ce qui ouvre l'interrupteur IE.

Le second état ET2 du dispositif DP est maintenu tant que la tension aux bornes de la résistance de dérivation est trop élevée pour débloquer le transistor bipolaire TB. En d'autres termes, l'état ET2 est maintenu lorsque la tension VL aux bornes de la charge RL est inférieure à un second seuil VL2=2 Volts, ce qui correspond à une résistance de charge RL2 = RD.VL2/(VE-VL2) = 400 Ω. Lorsque la résistance de charge RL excède la valeur RL2, suite à la suppression du court-circuit, le transistor bipolaire TB est à nouveau saturé, ce qui commande le passage à l'état conducteur du transistor MOS TM et donc l'ouverture de l'interrupteur IE. La thermistance TH offre alors à nouveau une résistance faible rTH=20 Ω en série avec la résistance RL.

Il apparaît que le dispositif de protection bascule de l'état ET1 à l'état ET2 lorsque RL < RL1 = 300 Ω, et de l'état ET2 à l'état ET lorsque RL > RL2 = 400 Ω. Ces variations de résistance RL présentent une hystérésis de RL2-RL1 = 100 Ω et évitent les pompages.

Selon d'autres variantes, la thermistance TH et le transistor TM peuvent être permutés entre les bornes F- et B- de la résistance RD, ou peuvent être connectés en parallèle avec la résistance RD entre les bornes B+ et F+ moyennant un changement de type du transistor TB.

Le transistor TB peut être remplacé par un relais, et le transistor TM par un contact commandé par le relais, mais cette solution exige une consommation plus élevée en courant.

## Revendications

1. Dispositif pour protéger une source de tension (ST) contre des courts-circuits dans un circuit de charge (RL) alimenté par la source, ledit dispositif comprenant
- des moyens de mesure de tension (DM) pour détecter des tensions (VL) aux bornes (F+, F-) du circuit de charge (RL) supérieures à des premier et second seuils de tension (VL1, VL2), le premier seuil (VL1) étant supérieur au second seuil (VL2),
- un interrupteur de courant (IE) connecté entre une borne (F-) du circuit de charge et une borne (B-) de la source de tension (ST) et commandé par les moyens de mesure de tension (DM),
- une thermistance (TH) à coefficient de température positif connectée en série avec le circuit de charge (RL) et l'interrupteur de courant (IE) entre les bornes (B+, B-) de la source de tension (ST), et offrant une tension de basculement (VTH1) sensiblement inférieure au premier seuil de tension (VL1) et nettement supérieure au second seuil de tension (VL2) déterminé par les moyens de mesure de tension, et
- une résistance de dérivation (RD) connectée en parallèle avec la combinaison série comprenant la thermistance (TH) et l'interrupteur de courant (IE),
- ledit interrupteur de courant étant commandé par les moyens de mesure de tension (DM), pour basculer d'un état fermé à un état ouvert lorsque la tension aux bornes du circuit de charge devient inférieure au premier seuil (VL1), et pour basculer de l'état ouvert à l'état fermé lorsque la tension aux bornes du circuit de charge devient supérieure au second seuil (VL2).

2. Dispositif conforme à la revendication 1, caractérisé en ce que les moyens de mesure de tension (DM) mesurent la tension de circuit de charge (VL) à travers un pont de résistances (R1, R2) très grandes par rapport à l'impédance du circuit de charge.

3. Dispositif conforme à la revendication 1 ou 2, caractérisé en ce que les moyens de mesure de tension (DM) comprennent un transistor bipolaire (TB) dont les base (B) et émetteur (E) sont reliés aux bornes (F-, D) de la thermistance (TH) à travers des résitances (RB, RE) respectives.

4. Dispositif conforme à l'une quelconque des revendications 1 à 3, caractérisé en ce que l'interrupteur de courant (IE) comprend un transistor à effet de champ (TM), de préférence à grille isolée , dont la grille (G) est contrôlée par les moyens de mesure de tension (DM), et dont l'une des électrodes de drain et source (D, S) est reliée à la thermistance (TH).

5. Dispositif conforme à l'une quelconque des revendications 1 à 4, caractérisé en ce que les basculements de l'état fermé à l'état ouvert et de l'état ouvert à l'état fermé de l'interrupteur de courant (IE) correspondent à des résistances du circuit de charge (RL) dont la différence est de l'ordre de 100 Ohms.

6. Dispositif conforme à l'une quelconque des revendications 1 à 5, caractérisé en ce que la source de tension (ST) a une tension nominale (VE) de 41 Volts environ, les premier et second seuils de tension (VL1, VL2) sont de l'ordre de 20 et 2 Volts, et le courant de basculement (ITHb) de la thermistance (TH) est de l'ordre de 130 mA.

## Patentansprüche

1. Vorrichtung zum Schutz einer Spannungsquelle (ST) gegen Kurzschlüsse in einem Lastkreis (RL), der durch die quelle gespeist wird, wobei die Vorrichtung umfaßt:
- Mittel zur Spannungsmessung (DM), um Spannungen (VL) an den Anschlüssen (F+, F-) des Lastkreises (RL) zu erfassen, die höher als erste und zweite Spannungschwellen (VL1, VL2) sind, wobei die erste Schwelle (VL1) höher als die zweite Schwelle (VL2) ist,
- einen Stromschalter (IE), der zwischen einem Anschluß (F-) des Lastkreises und einem Anschluß (B-) der Spannungsquelle (ST) angeschlossen ist, und durch die Mittel zur Spannungsmessung (DM) gesteuert wird,
- einen Thermistor (TH) mit positivem Temperaturkoeffizienten, der in Reihe mit dem Lastkreis (RL) und dem Stromschalter (IE), zwischen den Anschlüssen (B+, B-) der Spannungsquelle (ST) angeschlossen ist und eine Kippspannung (VTH1) zur Verfügung stellt, die deutlich. niedriger als die erste Spannungsschwelle (VL1) und klar höher als die zweite Spannungsschwelle (VL2) ist, bestimmt durch die Mittel zur Spannungsmesssung, und
- einen Zweigwiderstand (RD), der parallel zu der Reihenkombination angeschlossen ist, die den Thermistor (TH) und den Stromschalter (IE) umfaßt,
- wobei der Stromschalter (IE) durch die Mittel zur Spannungsmessung (DM) gesteuert wird, um aus einem geschlossenen Zustand in einen offenen Zustand zu kippen, wenn die Spannung an den Anschlüssen des Lastkreises kleiner als die erste Schwelle (VL1) wird, und um aus dem offenen Zustand in den geschlossenen Zustand zu kippen, wenn die Spannung an den Anschlüssen des Lastkreisen höher als die zweite Schwelle (VL2) wird.

2. Vorrichtung nach Anspruch 1, dadurch **gekennzeichnet**, daß die Mittel zur Spannungsmessung (DM) die Spannung des Lastkreises (VL) über eine Meßbrücke aus Widerständen (R1, R2) messen, die sehr groß in bezug auf die Impedanz des Lastkreises sind.

3. Vorrichtung nach Anspruch 1 oder 2, dadurch **gekennzeichnet**, daß die Mittel zur Spannungsmessung (DM) einen Bipolartransistor (TB) umfassen, dessen Basis (B) und Emitter (E) über die jeweiligen Widerstände (RB, RE) mit den Anschlüssen (F-, D) des Thermistors (TH) verbunden sind.

4. Vorrichtung nach einem beliebigen der Ansprüche 1 bis 3, dadurch **gekennzeichnet**, daß der Stromschalter (IE) einen Feldeffektransistor (TM), vorzugsweise mit isoliertem Gate, umfaßt, dessen Gate (G) durch die Mittel zur Spannungsmessung (DM), kontrolliert wird, und von dem eine von den Drain- und Sourceelektroden (D, S) mit dem Thermistor (TH) verbunden ist.

5. Vorrichtung nach einem beliebigen der Ansprüche 1 bis 4, dadurch **gekennzeichnet**, daß die Kippvorgänge des Stromschalters (IE) vom geschlossenen Zustand in den offenen Zustand und vom offenen Zustand in den geschlossenen Zustand Widerständen des Lastkreises (RL) entsprechen, deren Differenz in der Größe von 100 Ohm liegt.

6. Vorrichtung nach einem beliebigen der Ansprüche 1 bis 5, dadurch **gekennzeichnet**, daß die Spannungsquelle (ST) eine Nennspannung (VE) von ungefähr 41 Volt hat, die erste und zweite Spannungsschwelle (VL1, VL2) in der Größe von 20 und 2 Volt sind, und der Kippstrom (ITHb) des Thermistors (TH) in der Größe von 130 mA ist.

## Claims

1. Device for protecting a voltage source (ST) against short circuits in a load circuit (RL) powered by the source, said device comprising
- voltage measuring means (DM) for detecting voltages (VT) across terminals (F+, F-) of the load circuit (RL) more than first and second voltage thresholds (VL1, VL2), the first threshold (VL1) being more than the second threshold (VL2),
- a current switch (IE) connected between a terminal (F-) of the load circuit and a terminal (B-) of the voltage source (ST) and controlled by the voltage measuring means (DM),
- a positive temperature coefficient thermistor (TH) connected in series with the load circuit (RL) and the current switch (IE) between the terminals (B+, B-) of the voltage source (ST), and having a trigger voltage (VTH1) substantially less than the first voltage threshold (VL1) and clearly more than the second voltage threshold (VL2) determined by the voltage measuring means, and
- a shunt resistor (RD) connected in parallel with the series combination comprising the thermistor (TH) and the current switch (IE),
- said current switch being controlled by the voltage measuring means (DM) to switch from an on state to an off state when the voltage across the load circuit becomes more than the second threshold (VL2).

2. Device according to claim 1, characterized in that the voltage measuring means (DM) measure the load circuit voltage (VL) through a resistor bridge (R1, R2) having resistances very high with regard to the impedance of the load circuit.

3. Device according to claim 1 or 2, characterized in that the voltage measuring means (DM) comprise a bipolar transistor (TB) of which the base (B) and emitter (E) are connected to the terminals (F-, D) of the thermistor (TH) through respective resistors (RB, RE).

4. Device according to any one of claims 1 to 3, characterized in that the current switch (IE) comprises a field effect transistor (TM) preferably with an insulating gate, of which the gate (G) is controlled by the voltage measuring means (DM), and of which one of the drain and source electrodes (D, S) is connected to the thermistor (TH).

5. Device according to any one of claims 1 to 4, characterized in that the triggerings from the on state to the off state and from the off state to the on state of the current switch (IE) correspond to resistances of the load circuit (RL) between which the difference is about 100 Ohms.

6. Device according to any one of claims 1 to 5, characterized in that the voltage source (ST) has a nominal voltage (VE) about 41 volts, the first and second voltage thresholds are about 20 and 2 volts, and the trigger current (ITHb) for the thermistor (TH) is about 130 mA.
